# EUROPEAN PATENT SPECIFICATION

(11) **EP 1 228 558 B1**
(45) Date of publication and mention of the grant of the patent: **21.01.2004**
(21) Application number: 00974194.3
(22) Date of filing: 09.11.2000
(51) Int. Cl.: H02K 3/04, H02K 9/197, H02K 9/19

(54) **ELECTRICAL MACHINE COMPRISING A STATOR WITH WINDINGS**
ELEKTRISCHE MASCHINE MIT STATORWICKLUNGEN
MACHINE ELECTRIQUE COMPRENANT UN STATOR AVEC ENROULEMENTS

(30) Priority: 09.11.1999 EP 99870233
(43) Date of publication of application: 07.08.2002
(73) Proprietor: ATLAS COPCO AIRPOWER N.V., 2610 Wilrijk (BE)
(72) Inventor: NILSON, Thord, Agne, Gustaf, S-135 54 Tyreso (SE)
(74) Representative: Donné, Eddy
(86) International application number: PCT/BE2000/000136
(87) International publication number: WO 2001/035513

(56) References cited:
- WO-A-94/22204
- DE-C- 496 884
- US-A- 4 103 197
- US-A- 4 563 606
- US-A- 5 304 883

## Description

The invention relates to an electrical machine, for example a motor or a generator, comprising a housing and therein a stator surrounding the rotor and comprising a tubular core and windings surrounding the core wall, said stator windings extending axially and radially with respect to the axis of the core, whereby the machine comprises means for cooling the windings.

The continuous output power of such machine is primarily limited by the cooling of the stator windings.

These stator windings are normally composed of a relatively thick bundle of conductors and the number of adjacent conductors increases towards the core as well from the outer side as from the inner side of the core.

At the inner side of the core, adjacent windings practically touch each other and the space between the rotor and the stator core is practically completely filled with windings except for a small ring-shaped air gap between the windings and the rotor.

This means that the portion of the windings situated at the inside the stator core can only be cooled towards the core and said air-gap.

Because of the limited heat conduction in the core and additional losses in the core, it is normally only possible to evacuate a limited part of the heat via the core.

Most of the heat should be evacuated via the air gap, but it will be difficult to cool in this way the centre portion of the winding parts at the inside of the core. The cooling of these windings is therefore limited.

To improve the cooling, it is known to add cooling means.

An electrical machine of the above kind with cooling means is disclosed in US-A-5.304.883. The stator windings comprise two portions, a first inner portion being located within the air gap between the core wall and the rotor and a second outer portion being situated outside this gap.

The windings of the outer second portions have a greater cross-section area and thus a greater thermal mass than the windings of the first inner portions, providing a heat sink for the first portions and permitting the first portions to be cooled more efficiently.

The stator includes an elongated bore seal sealing the house to define an annular stator chamber and the housing provides inlet and outlet ports that are in fluid communication with the chamber allowing a coolant to flow in and out said chamber for cooling the windings.

Windings having two portions are of a more complicated construction. Moreover the cooling is still limited as adjacent windings still practically touch each other so that the space between the rotor and the stator core is practically completely filled with the exception of a small space at the outer side of the core as the outer portions radially extend a little farther than the inner portions.

The invention seeks to provide an electrical machine having an improved cooling of the stator windings.

In accordance with the invention, this object is accomplished by the fact that as well on the inside as on the outside of the core the windings are for at least 95%, and preferably completely, spaced apart, forming gaps between them, the cooling means comprising a cooling medium in these gaps, whereby the windings are formed by a wire made from individually insulated conductors which are wires or strands and extend in a zigzag pattern between the edges of the winding, said edges being in thermal conductive contact with the cooling medium in said gaps.

This means that, also on the inside of the core, the sides of the windings form cooling areas for evacuating heat by means of the cooling medium. Not only the cooling area is increased but the distance to the centre portion of the winding parts at the inner side of the core and a cooling area is relatively small.

Moreover also parts of the inner side of the tubular stator core are cooled so that the cooling of the core is also improved and thereby also the possibility to cool the windings through the core is increased.

In a section perpendicular to the winding, and in the transversal direction there is only one wire with in zigzag extending insulated conductors.

In known windings, the conductors of the wire of the winding extend parallel to each other or are twisted in small bundles, which extend parallel to each other. These small bundles may for instance consist of Litz wires having twisted or braided wires, the winding wire comprising several of such Litz wires which extend parallel to each other.

In such known windings, the heat conduction of the winding perpendicular to the direction of the winding is very small compared to the heat-conduction of copper. Therefore the winding is often impregnated with special materials to increase the thermal conductivity, but even then the thermal conductivity in transversal direction of the winding is relatively small and the possible cooling of the winding is limited.

By the zigzag pattern according to the invention, the heat can be transferred along the wires to the edge of the winding and so to the cooling medium instead of having to jump through the insulation from one wire to the other and the heat may be dissipated laterally to a much greater extend than when the conductors are parallel.

DE-C-496.884 discloses a method for manufacturing a winding wire wherein the conductors extend from on edge of the wire to the other. However this document does not disclose how such wire is used in a winding. Nothing is suggested that the edges of the wire are also the edges of the winding and are in thermal conductive contact with a cooling medium. On the contrary, with the purpose of cooling, the winding wire may be made hollow, comprising thus a channel for cooling air.

A stator with angularly spaced windings is disclosed as prior art. in US-A-4.103.197, but the windings are not cooled.

WO 94 22204 A discloses an electrical machine with a stator comprising a ring shaped core surrounded by spaced apart armature coils formed of rectangular copper wire. These coils are wound across lamination cores in the form of generally rectangular tori located about, and perpendicular to the rotor shaft. The rotor is a disk assembly comprising a disk perpendicular to the rotor axis on one or both sides of a ring shaped core with the windings. The disk is parallel to the core and opposite the windings permanent magnet field poles are mounted to face the lamination cores and armature coils, which are spaced apart with either air or iron core between then. The heat generated in the stator windings is dissipated into a liquid cooling arrangement built into the stator element.

According to the invention, the zigzag pattern may be under angles between 5° and 45° and preferably between 10° and 30° with respect to the mean longitudinal direction of the winding.

More particularly, the winding wire may consist of a wire formed by a flat and wide packet of insulated conductors, each conductor extending in zigzag from one side of the packet to the other.

Preferably the windings meant herebefore are segments of the windings normally provided for each pole relating to one phase.

The classical windings corresponding to each pole is split up in a number of smaller windings electrically connected to each other. The greater the total number of windings, the greater the number of gaps between them and the greater the possibly cooling.

The cooling medium may be a fluid having access to the gaps and the whole housing may then form a fluid tight chamber for cooling fluid or the housing may be separated in two separated spaces by means of a tube surrounding a rotor, the space on the outside of this tube forming an fluid tight chamber comprising the windings.

This chamber may be filled with the cooling fluid, for example cooling oil or the housing may be provided with at least one inlet and at least one outlet for the cooling fluid, in fluid communication with the chamber, the cooling means comprising means for forcing cooling medium through the inlet inside the housing, along the windings and through the outlet outside the housing.

The invention will now be described by way of example and with reference to the accompanying drawings, in which:
Figure 1 represents an axial section of an electric motor provided with a stator and windings, according to the invention;
Figure 2 is a top view of the stator with windings from the motor of figure 1;
Figure 3 is an end view of the stator with windings of figure 2;
Figure 4 is a perspective view of the stator with windings of figures 2 and 3;
Figure 5 represents an axial section similar to the one of figure 1, but relating to another embodiment one of figure 1, but relating to another embodiment of the motor;
Figure 6 represents one possible electrical connection of the stator windings in a three-phase motor, according to the invention;
Figure 7 represents a view similar to the one of figure 3, but showing the electrical connections to the windings;
Figure 8 represents a section along line VIII-VIII in figure 5, on a larger scale;
Figure 9 represents a section along line IX-IX in figure 8, on a still larger scale;
Figure 10 represents a section similar to the one of figure 9, but with respect to another form of embodiment;
Figure 11 represents a section similar to the one of figure 8, but with respect to another form of embodiment.

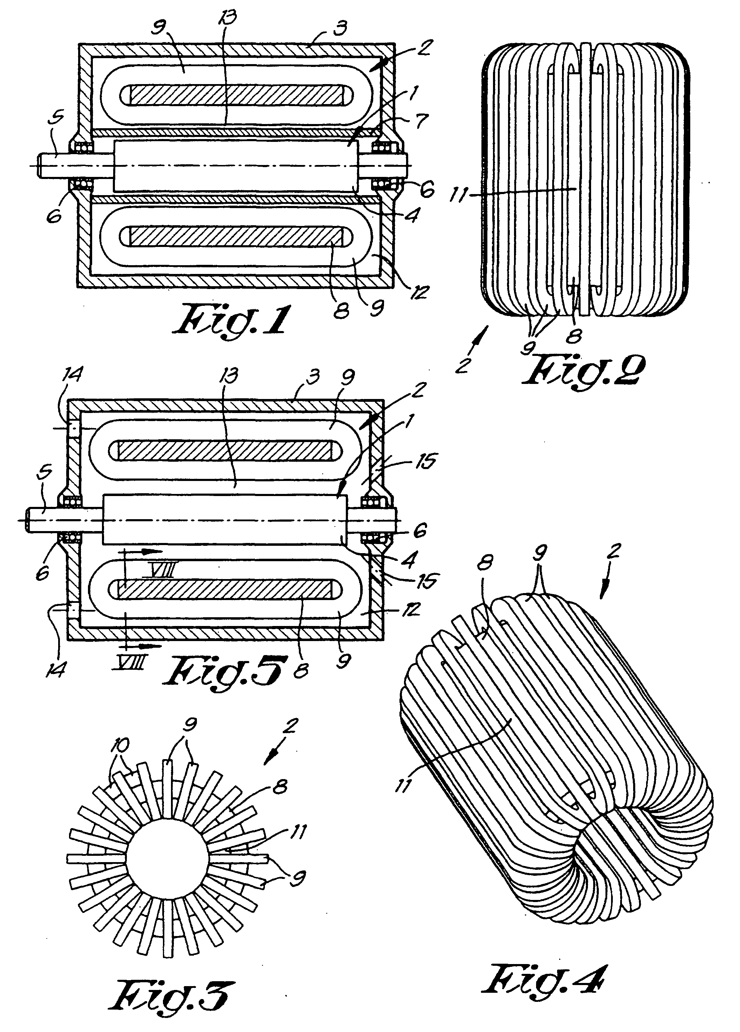

The electrical machine shown in figure 1 is an electric motor, comprising essentially a rotor 1, a stator 2 surrounding the rotor 1 and a housing 3 surrounding the stator 2.

The housing 3 is approximately cylindrical with closed ends and the rotor 1 contains a rotor body 4 mounted on a shaft 5 which is journaled in these closed ends by means of bearings 6.

The rotor 1 is surrounded by a tubular separation wall 7, separating the rotor 1 from the stator 2 and forming a fluid tight chamber 12 for the stator.

The stator 2 has a tubular core 8 and is provided with a number of stator windings 9, electrically insulated from each other and surrounding the wall of the core 8 and consequently traversed in their centre by core 8 and extending in axial and radial direction with respect to the longitudinal axis of the core 8 which axis coincides with the rotation axis of the rotor 1.

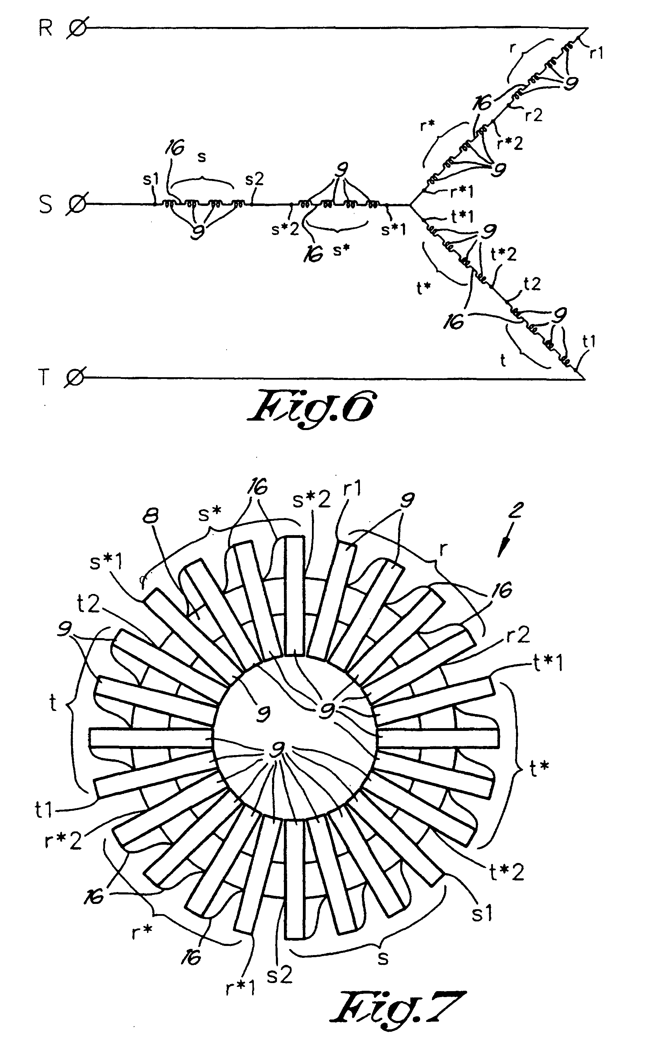

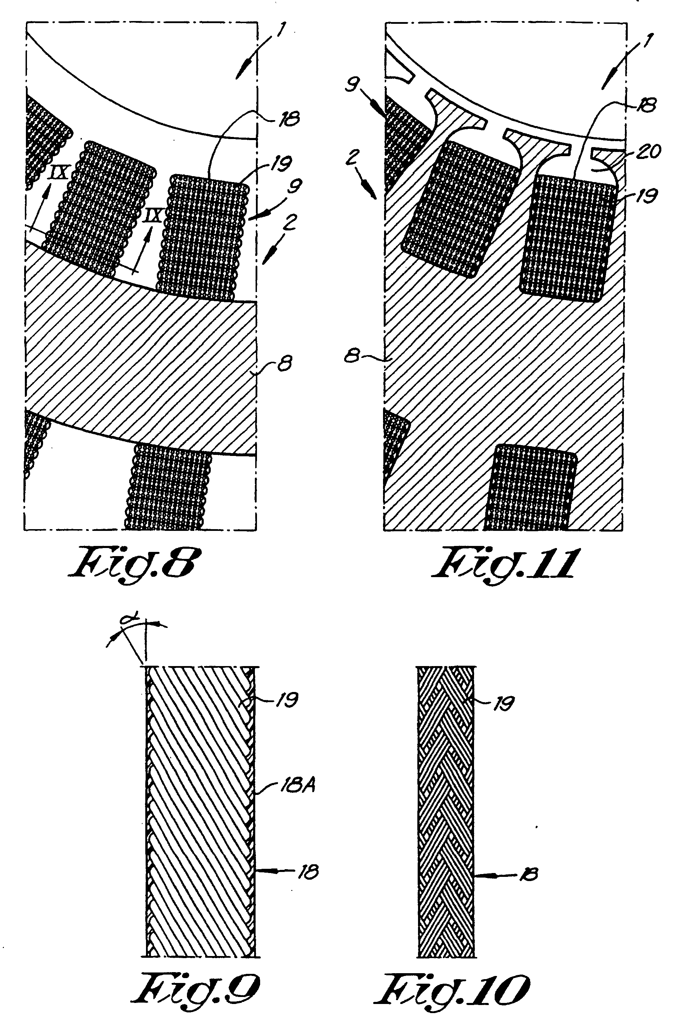

As shown in detail in figures 2 to 4, these windings 9 have the shape of thin discs, having in the example given a constant thickness.

The discs fan out like the rays of a star, and are oblong in the direction of the axis of the rotor 1 with rounded ends.

Each disc forming winding 9 is provided with an axial slot for the core 8. Part of each disc is situated in the air gap between the rotor 1 and the core 8, but inside the stator chamber 12, and part in the air gap 13 between the core 8 and the housing 3, on the outer side of the core 8.

The windings 9 are made from bundles of wires or strands surrounding the core 8 or from a single wire, for instance a Litz wire.

The windings 9 are formed by a wire 18 made from individually insulated conductors 19, but these conductors 19 are extending in zigzag so that each conductor 19 regularly reaches the outer surface or edge of the winding 9. The conductors 19 may be single wires as shown in figures 8 and 9 or may be strands or bundles.

The zigzag pattern is under angles α between 5° and 45°, preferably between 10° and 30° with respect to the mean longitudinal direction of the winding 9 and the wire 18.

The conductors 19 may be included in a flat and wide packet with nearly rectangular section as represented in figures 8 and 10, each of the conductors 19 reaching from one side of the packet to the other side, e.g. in the form of a plait.

The packet of insulated conductors 19 may for instance be surrounded by an envelope 18A of electrical insulating material, as shown in the figures 2 and 3.

In fact the wire 18 may be considered as a flattened Litz wire.

Tests have shown that the heat conductivity of the winding 9 with winding wire 18 according to the invention with conductors 19 zigzagging from one edge of the winding to the other, is more than ten times that of a winding with parallel standard Litz wires.

In another embodiment, the conductors 19 are not held together by an envelope 19A but may be held together in the packet by forming a braid or plait, in which case the envelope may be omitted. This could still improve the heat dissipation. Figure 10 shows such embodiment.

The different layers of this wire or these wires or strands in a winding 9 may be hold together by means of an insulating varnish.

The windings 9 may be hold into place by means of supports 10. These supports may be insulating pieces fixed to the core 8. Only two such supports 10 are schematically shown in figure 3, but it is clear .that such support 10 is present between each pair of adjacent disc forming windings 9.

It is important that also on the inside of the core 8 there is a gap 11 between two adjacent disc shaped windings 9, at least over an important radial distance, more particularly over at least 95%, and preferably over the complete radial dimension of the discs as shown in the figures 2 to 4 and 7.

The stator chamber 12 and consequently also the spaces or gaps 11 between the disc-shaped windings 9 are filled with a cooling medium.

This cooling medium is preferably a liquid such as transformer oil. This liquid is stationary.

In another embodiment, the cooling medium is circulating, and the housing 3 is provided with one or more inlets 14 and one or more outlets 15 on opposite sides, in fluid communication with the stator chamber 12, as shown in figure 5. Means such as a fan or pump (not shown in the figures) are provided for forcing cooling liquid through the inlet, along the windings 9 and through the outlet. This cooling medium may be a gas such as air, forced over the windings 9, in which case the tubular wall 7 is not necessary, and in the embodiment of figure 5, this wall 7 is absent.

In still another embodiment, the cooling medium is solid and for example formed by portions of the stator 2 as shown in figure 11.

The packet constituting the wire 18 extends from one portion of the stator 2 to another. The wire 18 can be considered being situated in a channel 20 formed in the stator 2, the edges of the wire 18 touching the walls of the channel 20.

There may also be a thin electrical insulation between the wall of the channel 20 and the winding 9, whereby the insulation is so thin that thermal conduction from the conductors 19 towards the walls of the channel 20, which are in heat conducting material of the stator 1, mostly iron, is not prevented.

Thermal paste may be used to improve the cooling of the winding 9 against the iron of the stator 2 or another cold wall.

In all described embodiments, the disc-like shape of the windings 9 positioned in a star-disposition has as an excellent cooling as a result. Especially on the ends of the windings, heat may be dissipated more efficiently than with a conventional design.

The conductors or wires forming several disc-shaped windings 9 may be electrically connected to each other as shown in figures 6 and 7. When the discs are formed by windings, a same wire can form the windings and extend from one disc 9 to the other and form the windings for several discs 9.

Figure 6 shows the electrical connection of the windings in a three phase, two pole motor with Y-connection, R, S, T designating the phases and r, r*, s, s*, t, t* designating the normally used windings spread over six half-sectors.

As can be seen in figures 6 and 7, each of the six classical "windings" r, r*, s, s*, t and t* for each pole related to one phase is split into a number, in the given example four windings 9, electrically connected in series with each other by conductors 16.

When a cooling medium is present, there is a long contact distance between the cooling medium and the windings 9 on both sides of the core 8 and also a contact of the cooling medium with the inner side of the core 8.

Also on the inner side of the core 8, the sides of the windings 9 form cooling areas in contact with a liquid or gaseous, stationary of flowing cooling medium.

The splitting up of the classical windings r, r*, s, s*, t and t* in several windings 9 multiplies the contact surface with the cooling medium and improves considerably the cooling.

## Claims

1. Electrical machine, for example a motor or a generator, comprising a housing (3) and therein a stator (2) surrounding the rotor (1) and comprising a tubular core (8) and windings (9) surrounding the core wall, said stator windings (9) extending axially and radially with respect to the axis of the core (8), the machine comprises means for cooling the windings (9), **characterised in that** as well on the inside as on the outside of the core (8) the windings (9) are for at least 95% spaced apart, forming gaps (11) between them, the cooling means comprising a cooling medium in these gaps (11), whereby the windings (9) are formed by a wire made from individually insulated conductors (19) which are wires or strands and extend in a zigzag pattern between the edges of the winding (9), said edges being in thermal conductive contact with the cooling medium in said gaps (11).

2. Electrical machine according to claim 1, **characterised in that** the windings (9) of the stator (2) are completely spaced apart.

3. Electrical machine according to claim 2, **characterised in that** the zigzag pattern is under angles (α) between 5° and 45°, and preferably between 10° and 30°, with respect to the mean longitudinal direction of the winding (5).

4. Electrical machine according to any one of the preceding claims, **characterised in that** the windings (9) consist of a wire (18) formed by a flat and wide packet of insulated conductors (19), each conductor (19) extending in zigzag from one side of the packet to the other.

5. Electrical machine according to any one of claims 1 to 3, **characterised in that** the windings (9) consist of a wire (18) in the form of a packet of insulated conductors (19) extending in zigzag in the form of a plait or braid.

6. Electrical machine according to any one of the preceding claims, **characterised in that** the windings (9) of the stator (2) have the shape of thin discs with a constant thickness.

7. Electrical machine according to claim 6, **characterised in that** the discs are oblong in the direction of the axis of the rotor (1), and at their ends they are rounded.

8. Electrical machine according to either one of the preceding claims, **characterised in that** the stator (2) comprises supports (10) for the holding into place the windings (9).

9. Electrical machine according to any one of the preceding claims, **characterised in that** the windings (9) are segments of the windings normally provided for each pole relating to one phase.

10. Electrical machine according to either one of the preceding claims, **characterised in that** the complete housing (3) is fluid tight and form a tight chamber (12)

11. Electrical machine according to either one of claims 1 to 9, **characterised in that** the housing (3) is separated in two separated spaces by means of a tube (7) surrounding a rotor, the space on the outside of this tube (7) forming an fluid tight chamber (12) comprising the windings (9).

12. Electrical machine according to claim 10 or 11, **characterised in that** the cooling medium is a cooling fluid and the chamber (12) is filled with such cooling fluid, for example cooling oil.

13. Electrical machine according to claim 10 or 11, **characterised in that** the cooling medium is a cooling fluid and the housing (3) is provided with at least one inlet (14) and at least one outlet (15) for the cooling fluid, in fluid communication with the chamber (12), the cooling means comprising means for forcing cooling medium through the inlet (14) inside the housing (3), along the windings (9) and through the outlet (15) outside the housing (3) .

14. Electrical machine according to claim 12 or 13, **characterised in that** it is an air-gap wound motor and the cooling medium in the gaps (11) between the windings (9) is gaseous or liquid.

15. Electrical machine according to either one of claims 1 to 11, **characterised in that** the cooling medium is a solid heat conducting material and the windings (9) are in heat conductive connection with this solid heat conducting material, for instance the iron of a stator (2).

## Patentansprüche

1. Elektrische Maschine, zum Beispiel ein Motor oder ein Generator, umfassend ein Gehäuse (3) und darin einen Stator (2), der den Rotor (1) umgibt, und umfassend einen röhrenförmigen Kern (8) und Wicklungen (9), die die Kemwand umgeben, die Statorwicklungen (9) verlaufend axial und radial in Bezug auf die Achse des Kerns (8), die Maschine umfassend Mittel zum Kühlen der Wicklungen (9), **dadurch gekennzeichnet, dass** sowohl auf der Innenseite als auch auf der Außenseite des Kerns (8) die Wicklungen (9) zumindest zu 95 % in Zwischenräumen angeordnet sind, die Lücken (11) zwischen ihnen bilden, die Kühlmittel ein Kühlmedium in diesen Lücken (11) umfassen, wobei die Wicklungen (9) gebildet sind durch einen Draht, hergestellt aus individuell isolierten Leitern (19), die Drähte oder Stränge sind und in einem Zickzackmuster zwischen den Rändern der Wicklung (9) verlaufen und die Ränder in wärmeleitendem Kontakt mit dem Kühlmedium in den Lücken (11) ist.

2. Elektrische Maschine nach Anspruch 1, **dadurch gekennzeichnet, dass** die Wicklungen (9) des Stators (2) vollständig in einem Abstand voneinander sind.

3. Elektrische Maschine nach Anspruch 2, **dadurch gekennzeichnet, dass** das Zickzackmuster in Winkeln (α) zwischen 5° und 45°, vorzugsweise zwischen 10° und 30°, in Bezug auf die mittlere Längsrichtung der Wicklung (5) ist.

4. Elektrische Maschine nach einem der vorhergehend Ansprüche, **dadurch gekennzeichnet, dass** die Wicklungen (9) aus einem Draht (18) bestehen,, gebildet durch ein flaches und breites Paket von isolierten Leitern (19), und jeder Leiter (19) in Zickzack von einer Seite des Paktes zur anderen verläuft.

5. Elektrische Maschine nach einem der Ansprüche 1 bis 3, **dadurch gekennzeichnet, dass** die Wicklungen (9) aus einem Draht (18) in der Form eines Pakets von isolierten Leitern (19) bestehen, die in Zickzack in der Form eines Zopfes oder Geflechts verlaufen.

6. Elektrische Maschine nach einem der vorhergehenden Ansprüche, **dadurch gekennzeichnet, dass** die Wicklungen (9) des Stators (2) die Form dünner Scheiben mit einer konstanten Dicke haben.

7. Elektrische Maschine nach Anspruch 6, **dadurch gekennzeichnet, dass** die Scheiben länglich in Richtung zur Achse des Rotors (1) sind und dass ihre Enden gerundet sind.

8. Elektrische Maschine nach einem der vorhergehenden Ansprüche, **dadurch gekennzeichnet, dass** der Stator (2) Halter (10) umfasst, um die Wicklungen (9) an Ort und Stelle zu halten.

9. Elektrische Maschine nach einem der vorhergehenden Ansprüche, **dadurch gekennzeichnet, dass** die Wicklungen (9) Segmente der Wicklungen sind, die normalerweise für jeden Pol in Bezug auf eine Phase bereitgestellt sind.

10. Elektrische Maschine nach einem der vorhergehenden Ansprüche, **dadurch gekennzeichnet, dass** das komplette Gehäuse (3) flüssigkeitsdicht ist und eine dichte Kammer (12) bildet.

11. Elektrische Maschine nach einem der Ansprüche 1 bis 9, **dadurch gekennzeichnet, dass** das Gehäuse (3) mittels eines Schlauchs (7), der einen Rotor umgibt, in zwei separate Bereiche getrennt ist, wobei der Bereich auf der Außenseite dieses Schlauchs (7) eine flüssigkeitsdichte Kammer (12) bildet, die die Wicklungen (9) umfasst.

12. Elektrische Maschine nach Anspruch 10 oder 11, **dadurch gekennzeichnet, dass** das Kühlmedium eine Kühlflüssigkeit ist und die Kammer (12) mit einer solchen Kühlflüssigkeit, z.B. Kühlöl, gefüllt ist.

13. Elektrische Maschine nach Anspruch 10 oder 11, **dadurch gekennzeichnet, dass** das Kühlmedium eine Kühlflüssigkeit ist und das Gehäuse (3) mit mindestens einem Einlass (14) und mindestens einem Auslass (15) für die Kühlflüssigkeit, in Flüssigkeitsverbindung mit der Kammer (12), versehen ist, die Kühlmittel umfassend Mittel, um das Kühlmedium durch den Einlass (14) in das Gehäuse (3) hinein, an den Wicklungen (9) entlang, und durch den Auslass (15) aus dem Gehäuse (3) heraus zu zwingen.

14. Elektrische Maschine nach Anspruch 12 oder 13, **dadurch gekennzeichnet, dass** es ein Luftspalt-Wickelmotor ist und das Kühlmedium in den Lücken (11) zwischen den Wicklungen (9) gasförmig oder flüssig ist.

15. Elektrische Maschine nach einem der Ansprüche 1 bis 11, **dadurch gekennzeichnet, dass** das Kühlmedium ein festes, wärmeleitendes Material ist und die Wicklungen (9) in wärmeleitender Verbindung mit diesem festen wärmeleitenden Material sind, zum Beispiel dem Eisen von Stator (2).

## Revendications

1. Machine électrique, par exemple un moteur ou une génératrice, comprenant un boîtier (3) et à l'intérieur de ce dernier un stator (2) entourant le rotor (1) et comprenant un noyau tubulaire (8) et des enroulements (9) entourant la paroi du noyau, lesdits enroulements de stator (9) s'étendant en direction axiale et en direction radiale par rapport à l'axe du noyau (8), la machine comprenant des moyens pour refroidir les enroulements (9), **caractérisée en ce qu'**aussi bien à l'intérieur qu'à l'extérieur du noyau (8), les enroulements (9) sont espacés les uns des autres à concurrence d'au moins 95 %, en formant des espaces libres (11) entre eux, les moyens de refroidissement comprenant un milieu réfrigérant dans ces espaces libres (11), les enroulements (9) étant formés à l'aide d'un fil métallique réalisé à partir de conducteurs isolés de manière individuelle (19) sous la forme de fils métalliques ou de torons qui s'étendent selon un modèle en zigzag entre les bords des enroulements (9), lesdits bords en entrant en contact conducteur de chaleur avec le milieu de refroidissement dans lesdits espaces libres (11).

2. Machine électrique selon la revendication 1, **caractérisée en ce que** les enroulements (9) du stator (2) sont complètement espacés les uns des autres.

3. Machine électrique selon la revendication 2, **caractérisée en ce que** le modèle en zigzag forme des angles (α) entre 5 degrés et 45 degrés, de préférence entre 10 degrés et 30 degrés, par rapport à la direction longitudinale principale de l'enroulement (5).

4. Machine électrique selon l'une quelconque des revendications précédentes, **caractérisée en ce que** les enroulements (9) sont constitués d'un fil métallique (18) formé à l'aide d'un paquet large et plat de conducteurs isolés (19) s'étendant en zigzag d'un côté du paquet à l'autre.

5. Machine électrique selon l'une quelconque des revendications 1 à 3, **caractérisée en ce que** les enroulements (9) sont constitués d'un fil métallique (18) sous la forme d'un paquet de conducteurs isolés (19) s'étendant en zigzag sous la forme d'une tresse ou d'un cordon.

6. Machine électrique selon l'une quelconque des revendications précédentes, **caractérisée en ce que** les enroulements (9) du stator (2) prennent la forme de disques minces possédant une épaisseur constante.

7. Machine électrique selon la revendication 6, **caractérisée en ce que** les disques sont de forme oblongue dans la direction de l'axe du rotor (1) et sont arrondis à leurs extrémités.

8. Machine électrique selon l'une quelconque des revendications précédentes, **caractérisée en ce que** le stator (2) comprend des supports (10) pour maintenir en place les enroulements (9).

9. Machine électrique selon l'une quelconque des revendications précédentes, **caractérisée en ce que** les enroulements (9) sont des segments des enroulements normalement prévus pour chaque pôle par rapport à une phase.

10. Machine électrique selon l'une quelconque des revendications précédentes, **caractérisée en ce que** le boîtier complet (3) est étanche aux fluides et forme une chambre étanche (12).

11. Machine électrique selon l'une quelconque des revendications précédentes, **caractérisée en ce que** le boîtier (3) est séparé en deux espaces individuels à l'aide d'un tube (7) entourant le rotor, l'espace situé à l'extérieur de ce tube (7) formant une chambre étanche aux fluides (12) comprenant les enroulements (9).

12. Machine électrique selon la revendication 10 ou 11, **caractérisée en ce que** le moyen de refroidissement est un fluide de refroidissement et la chambre (12) est remplie avec un tel fluide de refroidissement, par exemple avec de l'huile de refroidissement.

13. Machine électrique selon la revendication 10 ou 11, **caractérisée en ce que** le moyen de refroidissement est un fluide de refroidissement et le boîtier (3) est muni d'au moins une entrée (14) et d'au moins une sortie (15) pour le fluide de refroidissement, en communication de fluide avec la chambre (12), le moyen de refroidissement comprenant un moyen pour forcer le milieu de refroidissement à travers l'entrée (14) à l'intérieur du boîtier (3) le long des enroulements (9) et à travers la sortie (15) à l'extérieur du boîtier (3).

14. Machine électrique selon la revendication 12 ou 13, **caractérisée en ce qu'**il s'agit d'un moteur bobiné à entrefer et le milieu de refroidissement dans les espaces libres (11) entre les enroulements (9) est de type gazeux ou liquide.

15. Machine électrique selon l'une quelconque des revendications 1 à 11, **caractérisée en ce que** le moyen de refroidissement est une matière solide conduisant la chaleur et les enroulements (9) sont disposés en connexion de conduction thermique avec cette matière solide conduisant la chaleur, par exemple le fer d'un stator (2).
